# EUROPEAN PATENT SPECIFICATION

(11) **EP 4 174 876 B1**
(45) Date of publication and mention of the grant of the patent: **11.03.2026**
(21) Application number: 21382986.4
(22) Date of filing: 02.11.2021
(51) Int. Cl.: G21C 17/06, G21F 5/12

(54) **DEVICE FOR DETECTING LEAKS IN NUCLEAR FUEL ELEMENTS INSIDE STORAGE CONTAINERS**
VORRICHTUNG ZUR DETEKTION VON LECKS IN KERNBRENNELEMENTEN IM INNERN VON LAGERBEHÄLTERN
DISPOSITIF DE DÉTECTION DE FUITES DANS DES ÉLÉMENTS DE COMBUSTIBLE NUCLÉAIRE À L'INTÉRIEUR DE CONTENEURS DE STOCKAGE

(43) Date of publication of application: 03.05.2023
(73) Proprietor: Enusa Industrias Avanzadas S.A. S.M.E., 28040 Madrid (ES)
(72) Inventor: SÁNCHEZ HERNÁNDEZ, Ivan, 28040 Madrid (ES); RODERO RODERO, Jose, María, 28040 Madrid (ES); SÁNCHEZ SIGUERO, Alicia, 28040 Madrid (ES)
(74) Representative: Herrero & Asociados, S.L.

(56) References cited:
- CN-A- 109 493 984
- CN-A- 111 145 923
- JP-A- 2007 248 406
- US-B1- 9 435 899

## Description

### TECHNICAL SECTOR

The invention belongs to the nuclear energy sector, specifically to the inspection and classification of nuclear fuel elements whose useful life has ended when it is an open cycle, or for their reprocessing in a closed cycle.

### STATE OF THE ART

During the maintenance and decommissioning of nuclear power plants, the extraction of irradiated fuel elements from the pools is carried out. In the absence of centralized temporary storage (ATC) or deep geological storage (AGP), fuel elements are left in the plants themselves in enclosures called individualized temporary storage (ATI). For their transfer from the spent fuel pool to the storage, fuel elements must be properly classified. A series of inspections necessary for its correct classification are derived therefrom.

To properly store spent nuclear fuel in containers (i.e., dry), it is necessary to ensure complete containment of radioactive material, in other words, to guarantee the absence of leaks in the fuel elements. Radiolysis, oxidation of fuel element material and / or container, and other unwanted processes can occur in a leaking container.

A system for the detection of leaks in nuclear fuel elements inside a storage container is known from document CN 109 493 984 A.

This individualized classification of the elements is made based on the North American standard "Interim Staff Guidance" of the US NRC (United States Nuclear Regulatory Commission), specifically the ISG-1 rev.2 standards "Classifying the Condition of Spent Nuclear Fuel for Interim Storage and Transportation Based on Function" dated May 2007 and ISG-11 rev.3 "Cladding Considerations for Transportation and Storage of Spent Fuel" dated November 2003.

In U-235 nuclear fission, energy is produced, in the form of gamma rays, two or three neutrons, electrons, and usually two atomic nuclei (fission products); some of them being gaseous. Between them, 22 isotopes of Xe and Kr are produced, usually with decay periods of seconds to days. In addition, it must be taken into account that the elements removed from the pool may have been therein for more than 30 years, so that there remain negligible and therefore almost undetectable amounts of the gaseous isotopes generated. An additional difficulty is that at present, the inspection is performed before the fuel elements are loaded into the container. But after this tightness inspection, the elements will be subjected to other movements, at least during the transfer to the container, or if some other inspection is carried out. In these inspections they could be damaged.

### SUMMARY OF THE INVENTION

The present invention solves the technical problem set forth above thanks to the fact that it is provided with at least two Kr-85 detectors. K-85 is the only detectable fission product since its half-life period is 10.75 years. Kr-85 is therefore the best candidate for detecting a leak. Furthermore, the invention is provided with a gas distribution box and a pneumatic circuit to bring gas from the fuel element storage container to the scintillation detectors, so that the gas inside the container can be analyzed once the elements are already inside.

The device is also provided with the electronics associated with the scintillation detectors and with pressure and temperature sensors and a flow meter. Optionally, the distribution box is provided with means for the condensation and extraction of moisture from the gas and the circuit will be provided with a desiccant between the distribution box and the detectors. Detectors are surrounded by a sealed chamber and a shield made of tungsten or other heavy material and will also have at least a pressure sensor, a temperature sensor and a flow meter for the gas.

### BRIEF DESCRIPTION OF THE FIGURES

In order to help a better understanding of the features of the invention and to complement this description, the following figures are attached as an integral part thereof, the character of which is illustrative and not limiting:
Figure 1 shows the essential elements of the invention.
Figure 2 is a detail of the gas distribution box of the device of Figure 1.

### DETAILED DESCRIPTION

The device of the invention is capable of detecting leaked elements once they are already loaded in their storage container. That is, at the last possible moment before its storage in the ATI, ATC or AGP. This is an advantage over other leak detection means that are used before loading the elements, since after the tightness inspection, the elements can be subjected to other manipulations.

The invention is based on the detection of the Beta activity of Krypton-85 by at least one pair of scintillation detectors. The detection will be carried out on the gas extracted from the container while the interior is evacuated. Kr-85 is a noble gas fission product of Uranium. This gas must be found inside the rods of the fuel elements. If it is detected outside, in the gas that is extracted from the container, it means that there is at least one rod with some break. The scintillation detector is of the solid, plastic or organic type.

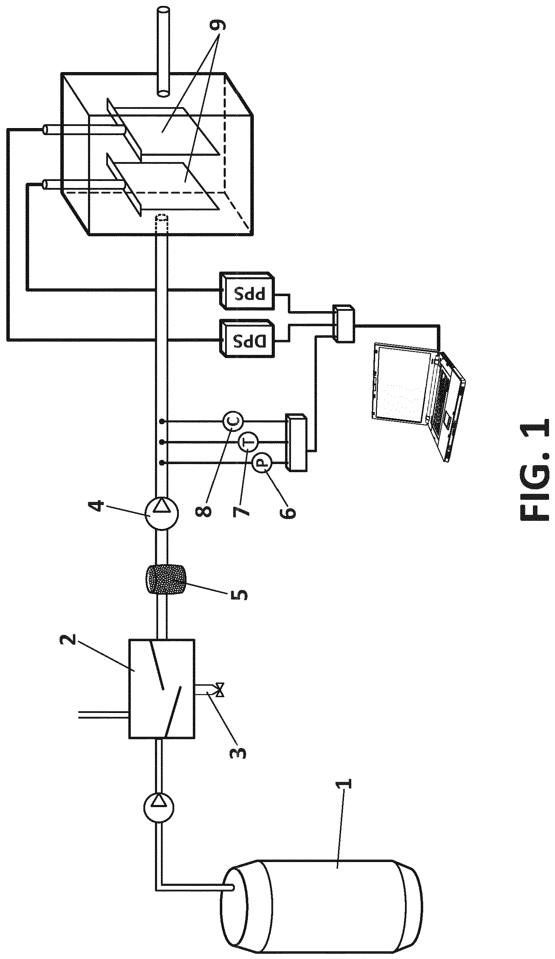

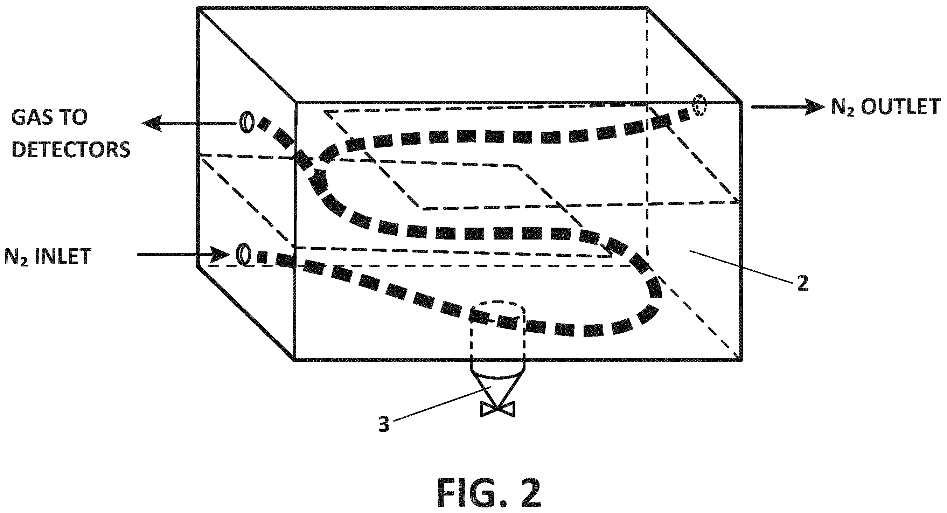

With reference to Figures 1 and 2, the device is provided with a distribution box 2 for the gas that is extracted from the container 1, from which the aliquot to be analyzed will be taken. The rest of the gas will come out through an expulsion hole. The design is preferably rectangular, with means for condensation and extraction of moisture from the gas, which can be for example two plates with a slight slope, so that the possible condensation that is formed falls into a tank 3. This tank will have a valve to allow water to drain.

A gas pump 4 is available to circulate gas from the container and the gas distribution box to the detectors. The pump will be adapted for a flow greater than 5 I/min and for working at least at 0.5 atmospheres.

Nitrogen is extracted from container 1 to make it pass through the distribution box 2. Due to the high hygroscopy of the detectors and their malfunction with humidity, it is necessary to ensure that the gas reaches them completely dry. The solution is to pass it through a desiccant container 5 filled with silicon gel.

Following the gas circuit, once it has passed through the desiccant 5 and before the detectors 9, a pressure sensor 6 is installed. The expected pressure in the circuit will be somewhat less than 1 bar, since both the distribution tank and the expulsion of gases from the shielding chamber of detectors will be at atmospheric pressure. If the pressure rises to over 1.3 bar, a pressure sensor alarm 6 will be activated.

Another parameter to monitor is the temperature at which the gas reaches the detectors, since the sensitivity of detectors decreases with temperature. In addition, at very high temperatures, the detectors could be damaged, so an audible alarm shall be placed in the acquisition program in case these thresholds are exceeded. For this purpose, a temperature sensor 7 is provided.

A constant flow rate to the shielding chamber and detectors is needed. For this purpose, a flow meter 8 must be installed, just before the gas inlet to a shielding chamber containing the detectors. A flow rate of 5 I/minute is more than enough to carry out detection. These values can be modified with the vacuum pump 4.

The signals from the pressure, temperature and flow sensors centralize their acquisitions in an analog-digital conversion module. This equipment preferably consists of the module itself and a chassis that will interface and send the signals via USB to a controller, preferably a PC. The module can comprise multiple inputs for exposed or other sensors. Each channel can obtain measurements from different sources, thermocouple, RTD (resistive temperature sensor), voltage, current.

The detectors are located in a watertight chamber and said chamber is inside a shield made of tungsten, or other alloys or heavy material, in order to avoid all the radiation that may strike from the outside. Thus, only the activity produced by the gas within the chamber will be detected.

As for the electronics associated with the detectors, it will be adapted to quantify the Beta activity of the Krypton-85 emitted by the gas. The nuclear spectrometry system will have the following components: a detector and its preamplifier, an electronic pulse processor, power supplies, and a controller (PC) with acquisition and analysis programs. The electronic pulse processor, in the case of the present invention, will preferably be composed of an analog filter, which will treat the signal from the detectors for better digitization, an AD converter with a precision of at least 12 bits and a pulse generator (Digital Pulse Shaper), with two parallel processing paths, fast and slow channel. The slow one will be used to obtain an accurate measurement of the height of the pulses and the fast one will be used to detect overlaps, the input count rate and time measurement.

In view of this description and figures, the person skilled in the art will be able to understand that the invention has been described according to some preferred embodiments thereof, but that multiple variations can be introduced in said preferred embodiments, without exceeding the scope of the invention, which is defined in the appended claims.

## Claims

1. System for the detection of leaks in nuclear fuel elements inside storage containers (1) comprising:
- at least two scintillation detectors (9);
- electronics associated with the detectors adapted to quantify the Beta activity of the Krypton-85 emitted by the gas, wherein the detectors are located in a watertight chamber and said chamber is inside a shield, **characterized in that** the system is provided with a gas distribution box (2) and a pneumatic circuit provided with a vacuum pump (4) adapted to bring said gas from the storage container (1) to the distribution box (2) and to extract part of said gas out of the box and take it to the detectors, wherein the rest of the gas comes out through an expulsion hole of the distribution box.

2. System according to claim 1, wherein the distribution box is provided with means for condensing and extracting moisture from the gas.

3. System according to claim 1 or 2, provided with a desiccant (5) between the distribution box (2) and the detectors (9).

4. System according to any of the preceding claims, wherein the detectors are surrounded by a watertight chamber and a shield made of tungsten or other heavy material.

5. System according to any of the preceding claims, further provided with at least a pressure sensor, a temperature sensor and a flow meter for the gas.

## Patentansprüche

1. System zur Detektion von Lecks in Nuklearbrennstoffelementen innerhalb von Lagerbehältern (1), umfassend:
- mindestens zwei Szintillationsdetektoren (9);
- Elektronik, die den Detektoren zugeordnet und dazu ausgelegt ist, die Beta-Aktivität des Krypton-85, das von dem Gas emittiert wird, zu quantifizieren, wobei sich die Detektoren in einer wasserdichten Kammer befinden und sich die Kammer innerhalb einer Abschirmung befindet, **dadurch gekennzeichnet, dass** das System mit einem Gasverteilungskasten (2) und einem Druckluftkreislauf versehen ist, der mit einer Vakuumpumpe (4) versehen ist, die dazu ausgelegt ist, das Gas aus dem Lagerbehälter (1) zu dem Verteilungskasten (2) zu führen und
einen Teil des Gases aus dem Kasten zu extrahieren und es zu den Detektoren zu bringen, wobei der Rest des Gases durch ein Ausstoßloch des Verteilungskastens austritt.

2. System nach Anspruch 1, wobei der Verteilungskasten mit einem Mittel zum Kondensieren und Extrahieren von Feuchtigkeit aus dem Gas versehen ist.

3. System nach einem der Ansprüche 1 oder 2, das mit einem Trocknungsmittel (5) zwischen dem Verteilungskasten (2) und den Detektoren (9) versehen ist.

4. System nach einem der vorhergehenden Ansprüche, wobei die Detektoren von einer wasserdichten Kammer und einer Abschirmung, die aus Wolfram oder einem anderen schweren Material besteht, umgeben sind.

5. System nach einem der vorhergehenden Ansprüche, das ferner mit mindestens einem Drucksensor, einem Temperatursensor und einem Durchflussmesser für das Gas versehen ist.

## Revendications

1. Système pour la détection de fuites dans des éléments de combustible nucléaire à l'intérieur de conteneurs de stockage (1) comprenant :
- au moins deux détecteurs à scintillation (9) ;
- de l'électronique associée aux détecteurs adaptée pour quantifier l'activité bêta du krypton 85 émis par le gaz, dans lequel les détecteurs sont situés dans une chambre étanche à l'eau et ladite chambre est à l'intérieur d'un bouclier, **caractérisé en ce que** le système est pourvu d'un boîtier de distribution (2) de gaz et d'un circuit pneumatique pourvu d'une pompe à vide (4) adaptée pour amener ledit gaz provenant du conteneur de stockage (1) jusqu'au boîtier de distribution (2) et pour extraire une partie dudit gaz hors du boîtier et la conduire jusqu'aux détecteurs, dans lequel le reste du gaz sort par un trou d'expulsion du boîtier de distribution.

2. Système selon la revendication 1, dans lequel le boîtier de distribution est pourvu de moyens pour condenser et extraire de l'humidité du gaz.

3. Système selon la revendication 1 ou 2, pourvu d'un agent dessiccatif (5) entre le boîtier de distribution (2) et les détecteurs (9).

4. Système selon l'une quelconque des revendications précédentes, dans lequel les détecteurs sont entourés par une chambre étanche à l'eau et un bouclier en tungstène ou en un autre matériau lourd.

5. Système selon l'une quelconque des revendications précédentes, pourvu en outre d'au moins un capteur de pression, un capteur de température et un débitmètre pour le gaz.
